# EUROPEAN PATENT SPECIFICATION

(11) **EP 1 970 171 B1**
(45) Date of publication and mention of the grant of the patent: **24.06.2009**
(21) Application number: 08152574.3
(22) Date of filing: 11.03.2008
(51) Int. Cl.: B25J 17/02

(54) **Articulated robot wrist**
Roboterhandgelenk
Poignet de robot articulé

(30) Priority: 12.03.2007 EP 07425140
(43) Date of publication of application: 17.09.2008
(73) Proprietor: COMAU S.p.A., 10095 Grugliasco (Torino) (IT)
(72) Inventor: Tealdi, Igor, 10095 Grugliasco (Torino) (IT); Amparore, Mauro, 10095 Gruglaisco (Torino) (IT)
(74) Representative: Notaro, Giancarlo

(56) References cited:
- EP-A- 0 873 826
- EP-A- 1 415 774
- EP-A1- 0 502 832
- EP-A2- 0 074 882
- WO-A-97/47441
- WO-A-20/07037131
- JP-A- 10 166 292
- JP-A- 2005 169 489

## Description

The present invention relates to an articulated robot wrist, including:
- a first hollow body, substantially elbow-shaped, including a first end and a second end, and a through cavity giving out into said ends, said first end of the first hollow body being designed to be mounted on a robot component that can turn about a first axis;
- a second hollow body, substantially elbow-shaped, including a first end and a second end, and a through cavity giving out into said ends, said first end of the second hollow body being mounted on said second end of said first hollow body so that it can turn about a second axis inclined with respect to said first axis; and
- a third hollow body, including a first end and a second end, and a through cavity giving out into said ends, said first end of the third hollow body being mounted on said second end of said second hollow body so that it can turn about a third axis inclined with respect to said second axis,
- wherein said first and third axes form identical angles, different from 90°, with respect to said second axis,
- wherein the through cavities of said first, second, and third hollow bodies form a continuous passage along said first, second, and third axes, set through which are cables and/or pipes for supplying and/or controlling an apparatus associated to the third hollow body of the robot wrist,
- said robot wrist moreover including means for controlling rotation of said second and third hollow bodies about said second and third axes.

A robot wrist of the type referred to above is known from EP-A-0 873 826.

In said solution, the cables and/or pipes for supplying and/or controlling the equipment mounted on the end of the robot wrist are set in an internal passage through the three hollow bodies, along the respective axes of rotation. This arrangement proves particularly advantageous in so far as the cables and/or pipes are protected, during operation of the wrist, from collisions and from the risk of getting caught up. In addition, the fact that the cables and/or pipes traverse the three hollow bodies along their respective axes of rotation limits the movements to which said cables and/or pipes are subjected during the rotations of the wrist, hence decreasing the stresses to which they are subjected.

In the solution known from EP-A-0 873 826 the motors for controlling the hollow bodies are mounted in a set-back area, distinct from the wrist, and are connected in rotation to the respective hollow bodies via a transmission system including hollow and concentric transmission shafts, and gears with annular bodies.

The number of components of said transmission system is considerable, a fact which renders the solution complicated and costly. In addition, the fact that the motors are set at a distance from the respective controlled hollow body considerably impairs the precision of operation, on account of the plurality of types of play that come to sum up along the transmission line between the motor and the respective controlled hollow body.

EP 1 415 774 A1 describes an articulated manipulator including a series of hollow sections, articulated to one another about variously inclined axes, which each incorporate an electric motor for controlling rotation of the joint. Lines for supply and/or control both of the device associated to the manipulator at its end and of the electric motors associated to each joint pass inside the manipulator.

EP 1 415 774 A1 does not specify, however, the modalities of construction of the manipulator and in particular how the electric motors are incorporated in the joints.

The Japanese patent No. JP-A-10166292 describes, instead, a robot solution, in which cables and pipes to be connected to a terminal apparatus associated to the wrist of the robot are partially protected from the outside with the aid of covering elements, which provide a passage for the cables and pipes that is particularly tortuous.

The object of the present invention is to provide a solution that will guarantee the same advantages highlighted above with reference to the document No. EP-A-0 873 826, but that at the same time will be constructionally simple and far from costly.

The present invention has achieved this object by providing a robot wrist presenting all the characteristics specified in Claim 1.

In the robot wrist described herein an arrangement of the electric motors adjacent to the respective controlled hollow bodies is provided, which enables drastic reduction in the number of components and at the same time an arrangement of the cables and/or pipes in a continuous passage through the three hollow bodies, along the axes of rotation of the latter.

In the art, there already exist solutions of robot wrists which envisage an arrangement of the actuation motors in a position contiguous to the respective mobile parts of the wrist, which are controlled thereby. Solutions of this type are, for example, shown in the patent applications Nos. EP 0 0074 882 A2, EP 0 502 832 A1, and WO 97/47441 A1. The robot wrists illustrated in these documents present, however, structures that are very complex and cumbersome, where, moreover, the cables and the pipes follow extremely tortuous paths that cause, during the movements of the wrist, the cables and the pipes to be subject to considerable stresses.

As will be seen in what follows, as compared to the solutions of the patent applications Nos. EP 0 0074 882 A2, EP 0 502 832 A1, and WO 97/47441 A1, the robot wrist according to the present invention, in addition to the advantages already indicated extensively, deriving from the internal arrangement of the cables and/or pipes, presents at the same time a decidedly simpler and neater structure, in which the inertial stresses are extremely low.

Further characteristics and advantages of the invention will emerge from the ensuing description with reference to the annexed drawings, which are provided purely by way of non-limiting example and in which:
- Figure 1 is a view in elevation of an example of embodiment of the robot according to the known art;
- Figure 2 is a lateral cross-sectional view of a first embodiment of the robot wrist according to the invention;
- Figure 3 is a lateral cross-sectional view of a second preferred embodiment according to the invention;
- Figure 4 is a lateral view of a third embodiment according to the invention;
- Figure 5 is an exploded view of a motor-reducer-pinion subassembly; and
- Figure 6 is a view of a bushing for the arrangement of the cables and pipes within the cavity of the wrist for supply of equipment, according to the known art.

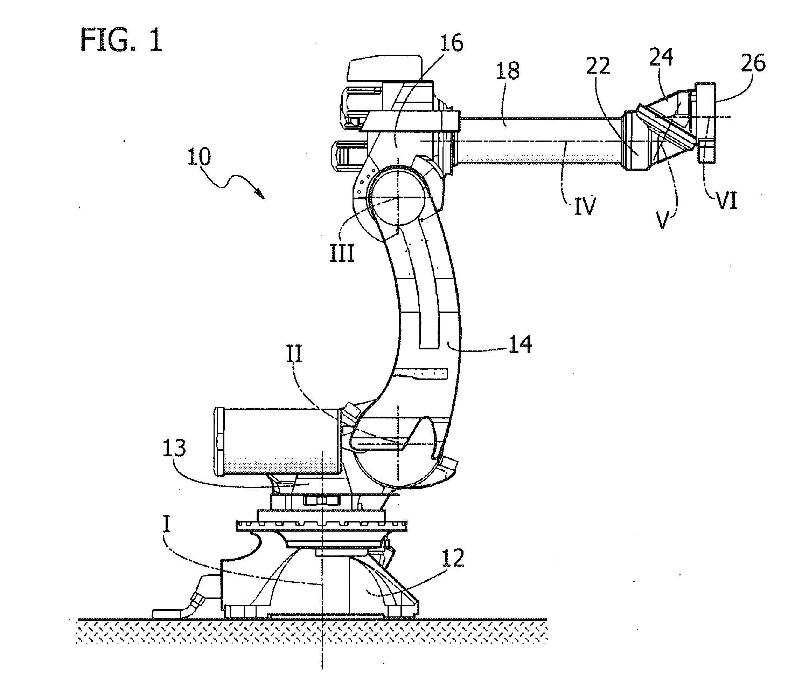

Represented in Figure 1 is an anthropomorphic robot of a known type, which is described hereinafter in its essential parts only in order to define the context of use of the wrist according to the invention, but it is evident that said wrist can be mounted also on different robots.

In the case of the example illustrated, the robot 10 represented in Figure 1 has a base structure 12 that carries an upright 13 in such a way that it can turn about a vertical axis I. The upright 13 carries in turn a vertical arm 14 in such a way that it can turn about a horizontal axis II. The top end of the vertical arm 14 in turn carries, in such a way that it can turn about a horizontal axis III, a structure 16 carrying an arm 18. The arm 18 is carried by the structure 16 so that it can turn about an axis IV that coincides with the main axis of the arm.

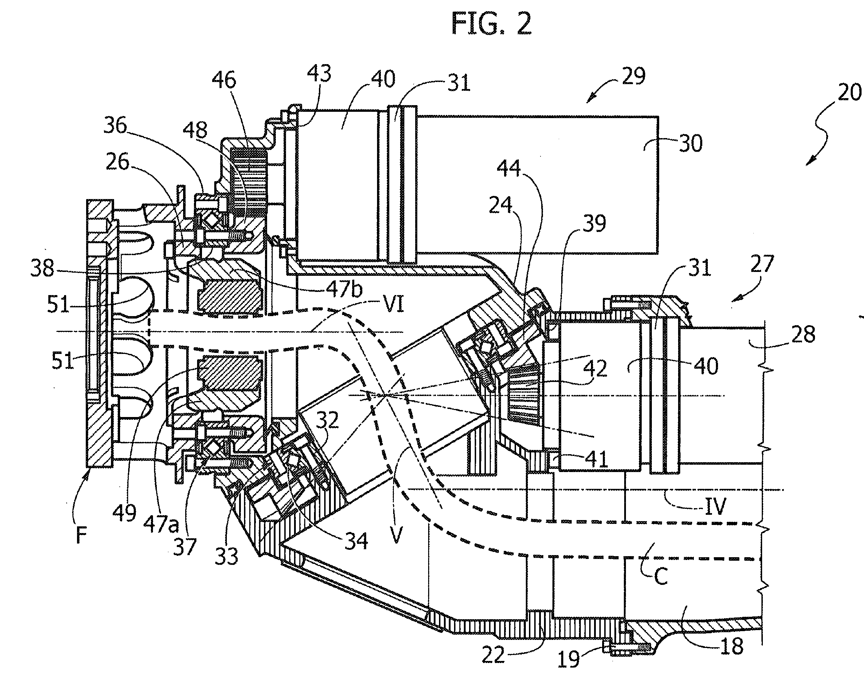

With reference to Figure 2, number 20 designates as a whole the articulated robot wrist.

The above robot wrist includes a first hollow body 22, which is substantially elbow-shaped and includes a first end and a second end, and a through cavity, which gives out into said ends. The first end of the first hollow body 22 is designed to be rigidly connected via screws 19 to a robot arm 18, which can turn about a first axis IV.

The wrist 20 further includes a second hollow body 24, which is substantially elbow-shaped and includes a first end and a second end, and a through cavity, which gives out into said ends. The first end of the second hollow body 24 is mounted on the second end of the first hollow body 22 so that it can turn about a second axis V inclined with respect to the first axis IV.

Finally, the wrist 20 includes a third hollow body 26, including a first end and a second end, and a through cavity, giving out into said ends. The first end of the third hollow body is mounted on the second end of the second hollow body 24 so that it can turn about a third axis VI inclined with respect to the second axis V.

The through cavities of the aforesaid first, second, and third hollow bodies 22, 24, 26 form a continuous passage along the first, second, and third axes IV, V, VI, set through which are cables and/or pipes for supplying and/or controlling an apparatus associated to the third hollow body 26 of the robot wrist.

The aforesaid passage has a considerable capacity so that the total number of cables and/or pipes that it can receive is considerable. For example, in the case where a welding gun is associated on the second end of the third hollow body, the supply lines that traverse said internal passage of the wrist include two pipes for delivery of cold water, two pipes for return of hot water, three air pipes, a cable for the control signal for the actuation motor of the gun, a cable for supply of said motor, a multibus cable, and three supply cables (or, alternatively, a single supply cable with three wires) for the electric welding current.

The axes of rotation IV and VI are inclined with respect to the axis of rotation V by an angle comprised between approximately 50° and 70°. Preferably, said angle of inclination is 60°.

This choice of inclination of the axis of rotation V with respect to the axes IV and VI enables a wide range of operation of the robot wrist to be obtained, and at the same time guarantees a simple and continuous passage for the cables and/or pipes within the wrist.

In a region corresponding to the joint between the arm 18 and the hollow body 22 a housing is provided for a first motor reducer 27. According to the dimensions of the first hollow body 22 and of its cylindrical portion designed to be coupled to the arm 18 of the robot, the housing for the first motor reducer 27 can be obtained inside the first hollow body 22 or else even partially in the arm 18 of the robot, but always in such a way that the first motor reducer 27 is substantially comprised in the volumes defined by the geometries of the arm 18 and of the first hollow body 22, with particular reference to the overall dimensions of the cross section of said arm.

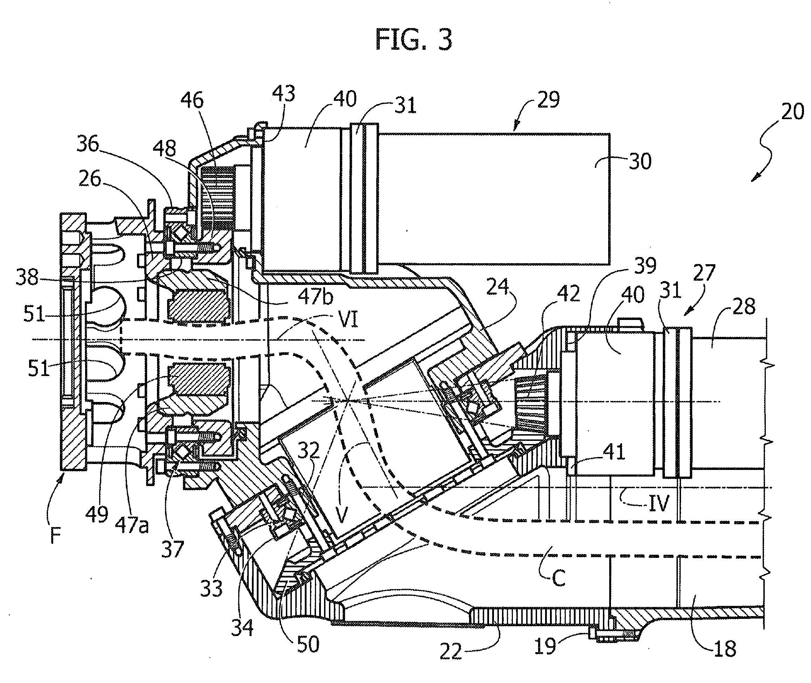

Provided in an area corresponding to the second hollow body 24 is a further housing for a second motor reducer 29. In particular, as may be seen in Figures 2 and 3, the hollow body 24 has externally on its side wall a seat, received in which is the second motor reducer 29, oriented substantially parallel to the third axis VI. Thanks to the elbow-shaped development of the hollow bodies 22 and 24, the motor reducer 29 is located at a distance from the walls of the hollow body 22 so as never to interfere with the latter whatever the angular position assumed by the hollow body 24 with respect to the hollow body 22.

The particular arrangement of the motor reducer 29, described above, enables the overall transverse dimensions of the wrist to be kept within certain limits. Furthermore, since the motor reducer 30 is inclined with respect to the axis V by an angle equal to the angle of inclination of the axis VI with respect to the axis V, in this case equal to approximately 60°, when it is carried in rotation by the hollow body 24, the forces of inertia that oppose the motion of rotation of the motor reducer 29 are decidedly limited.

Set between the first hollow body 22 and the second hollow body 24 is a single crossed-roller bearing 33 of a known type having an inner ring 32 rigidly connected to the first hollow body 22, whilst an outer ring 34 is rigidly connected to the second hollow body 24. A single crossed-roller bearing 37 is likewise provided between the second hollow body 24 and the third hollow body 26, with an outer ring 36 rigidly connected to the second hollow body 24 and an inner ring 38 rigidly connected to the third hollow body 26.

In compliance with the teachings of the European patent No. EP-A-0 873 826, filed in the name of the present applicant, associated to the third hollow body is a flange F for attachment of equipment, which has radial openings 51 in order to enable passage and distribution for the lines for supply thereof. As has already been mentioned, in the case for example where the equipment has a gun for electric spot welding, said lines include the cables for electrical power supply of the welding electrodes, the electric cables for transmission of signals at output from sensor devices associated to the welding gun, the pipes for supply of compressed air to the actuator of the welding gun (or the possible electric cables in the case of a gun actuated by an electric motor), and the tubes for supply of water for cooling the electrodes.

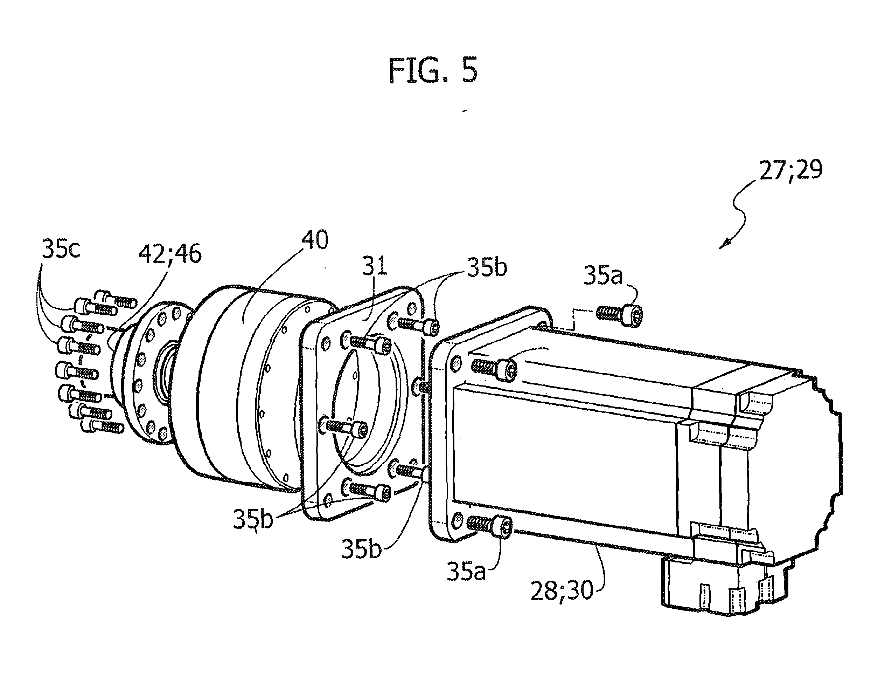

With reference to Figure 5, each motor reducer 27, 29 is constituted by a motor 28, 30, by a coupling flange 31, by a reducer 40 and by a pinion 42, 46. The reducers 40 are characterized by a high transmission ratio, and are preferably of an epicyclic or harmonic type.

Each reducer 40 is coupled at one of its ends to the corresponding motor 28, 30 by means of the coupling flange 31. The coupling flange is connected by means of screws 35a to the motor 28, 30 and to the reducer by means of other screws 35b. At the other end, the reducer 40 carries the pinion 42, 46 for transmission of motion, which is fixed thereto by a plurality of screws 35c.

The first motor reducer 27 including the first motor 28, the reducer 40, and a bevel pinion 42 is fixed by means of screws so that it comes to bear upon an end wall 39 of the respective housing. Set between the end wall 39 of the housing and the end of the reducer to which the bevel pinion 42 is fixed is a fixing flange 41 for adjustment of the play. During assembly of the wrist, the thickness of the bushing 41 is adapted so as to obtain the correct meshing of the bevel-gear pair. The bevel pinion 42 meshes with the internal toothing of a bevel crown wheel 44, and this, being fixed by means of screws (not represented) to the outer ring 34 of the bearing 33, is rigidly connected to the second hollow body 24.

The second motor reducer 29, including the second motor 30, the reducer 40, and a cylindrical pinion 46, is inserted in the housing made in the second hollow body 24 and is fixed so that it bears upon an end wall 43 of said housing by means of screws. The cylindrical pinion 46 meshes with a cylindrical ring gear 48, which is fixed to the inner ring 38 of the rolling bearing 37.

The motion of rotation coming from the motor 28 is converted through the reducer 40 and transferred to the bevel pinion 42, which drives in rotation the bevel crown wheel 44 rigidly connected to the outer ring 34 of the bearing 33, which is in turn fixed to the second hollow body 24. In this way, rotation is obtained of the second hollow body 24 about the axis V.

When the second motor 30 is activated, the rotation is transferred through the reducer 40 to the cylindrical pinion 46. The cylindrical pinion 46 meshes with the cylindrical gear 48, which is rigidly connected to the inner ring 38 and to the third hollow body 26. In this way, rotation is obtained of the third hollow body 26 about the axis VI.

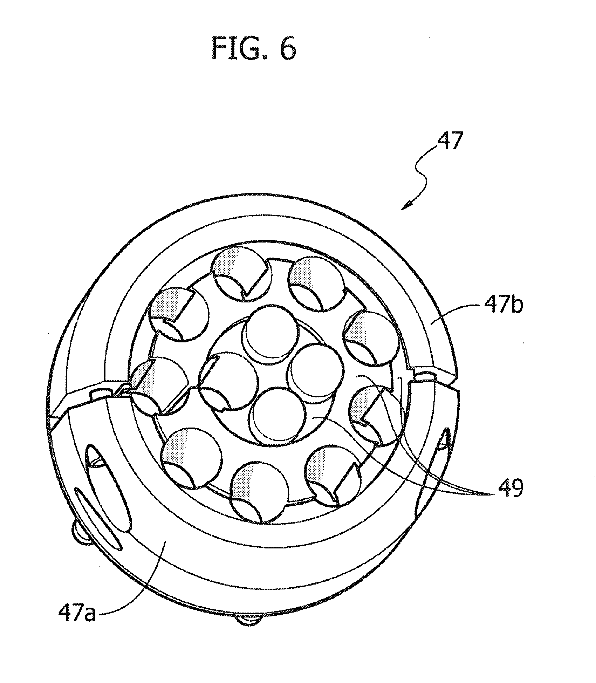

The internal cavity of the wrist enables passage of cables and/or pipes C for supply of the equipment (not represented) that is designed to be associated to the flange F. Said cables and/or pipes C are associated to a bushing 47 (illustrated in Figure 6), formed by two half-shells 47a, 47b. In the assembled configuration, the two half-shells 47a, 47b include perforated rubber rings 49, which support the cables and/or pipes C within the bushing 47 itself. Installation of the supply lines is performed by introducing the bushing 47 in the arm 18 of the robot, through the first hollow body 22 and the second hollow body 24 of the wrist up to the third hollow body 26, in which inclined surfaces co-operate with similar surfaces of the bushing 47 for centring purposes. Finally, by means of screws, the bushing 47 is rigidly fixed to the third hollow body 26.

Figure 3 illustrates another preferred embodiment of the invention. The architecture of the wrist and the arrangement of the components remains substantially identical to the embodiment of Figure 2, differing therefrom substantially only as regards the conformation of the crown wheel and pinion for transmission between the first motor 28 and the second hollow body 24. In said crown wheel and pinion, in the case of the embodiment of Figure 3, the bevel crown wheel 44 is replaced by a ring gear 50, with conical external toothing. This constructional variant implies that the inner ring 32 of the bearing 33 is connected to the second hollow body 24, whilst the outer ring 34 is connected to the first hollow body 22.

Said embodiment proves preferable in so far as the cables and/or pipes interface with the gear 50, which is mobile together with them during rotation of the second hollow body 24 so that between the cables and/or pipes and the gear 50 no sliding contact is brought about.

In the case of Figure 2, instead, the cables and/or pipes interface with the internal wall of the hollow body 22. In this case, during rotation of the hollow body 24, the cables and/or pipes are mobile with respect to said internal wall so that in operation there may occur rubbing of the cables and/or pipes, against said internal wall of the hollow body 22, which may cause deterioration of said cables and/or pipes.

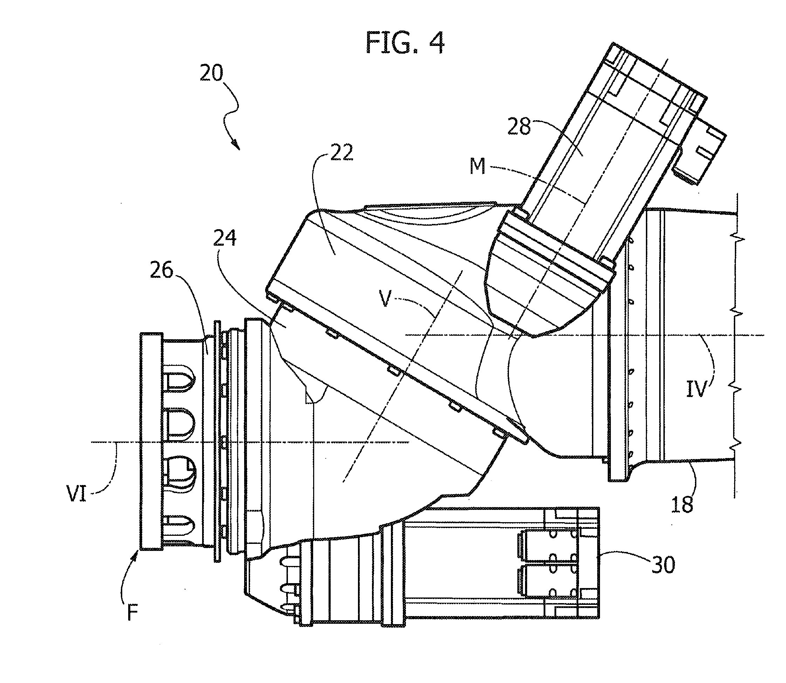

Finally, Figure 4 illustrates a further embodiment of the articulated robot wrist according to the invention. This further embodiment presents the peculiarity of having the first motor 28 carried by the first motor 22 so that its main axis M is parallel to the axis V of rotation of the second hollow body 24 with respect to the first hollow body 22, and hence inclined with respect to the axis IV. Said configuration, unlike the previous embodiment, enables use also for the first transmission of a cylindrical-gear pair (not illustrated).

For controlling rotation of the second hollow body 24 about the axis V, it would be possible to adopt a cylindrical-gear pair albeit maintaining the motor 28 with its axis parallel to the axis IV, as in the case of Figures 2 and 3. In this case, the two cylindrical gears would have their axes skew with respect to one another (i.e., axes that are not parallel and do not cross one another): one of the two cylindrical gears would have its axis parallel to the axis IV, and the other would have its axis parallel to the axis V. With such a configuration, a correct meshing would be possible by providing the cylindrical gears with adequately shaped teeth, in a way similar, for example, to the teeth of a gear with helical teeth that meshes with a wormscrew.

From the foregoing description, it is evident that the robot wrist according to the invention enables considerable simplification of the structure, with a notable saving in the number of the corresponding components and hence the costs in general.

Another advantage is constituted by the precision of the movements, due to the simplicity of the transmissions. The absence of the sum of the play is due to the fact that each actuator is housed in the hollow body adjacent to the one that it drives.

Of course, without prejudice to the principle of the invention, the details of construction and the embodiments may vary widely with respect to what described and illustrated herein purely by way of example, without thereby departing from the scope of the claims.

## Claims

1. An articulated robot wrist (20), including:
- a first hollow body (22), substantially elbow-shaped, including a first end and a second end, and a through cavity giving out into said ends, said first end of the first hollow body (22) being designed to be mounted on a robot component that can turn about a first axis (IV);
- a second hollow body (24), substantially elbow-shaped, including a first end, and a second end, and a through cavity giving out into said ends, said first end of the second hollow body (24) being mounted on said second end of said first hollow body (22) so that it can turn about a second axis (V) inclined with respect to said first axis (IV); and
- a third hollow body (26), including a first end and a second end, and a through cavity giving out into said ends, said first end of the third hollow body being mounted on said second end of said second hollow body (24) so that it can turn about a third axis (VI) inclined with respect to said second axis (V);
- wherein said first and third axes (IV, VI) form identical angles, different from 90°, with respect to said second axis (V); and
- wherein the through cavities of said first, second and third hollow bodies (22, 24, 26) form a continuous passage along said first, second and third axes (IV, V, VI), set through which are cables and/or pipes for supplying and/or controlling an apparatus associated to the third hollow body (26) of the robot wrist,
- said robot wrist moreover including means for controlling rotation of said second and third hollow bodies (24, 26) about said second and third axes (V, VI),
said articulated robot being **characterized in that**:
- said angle formed by said first and third axes (IV, VI) with respect to, said second axis (V) is comprised between substantially 50° and 70°,
- said means for controlling rotation of said second and third hollow bodies (24, 26) include:
- a first motor reducer (28) carried by said first hollow body (22);
- a single gear pair (42, 44; 42,50) for transmitting rotation of the output shaft of said first motor reducer (28) to said second hollow body (24), the driven gear (44; 50) of said gear pair having an annular body supported coaxially by the first end of the second hollow body (24);
- a second motor reducer (30), carried by said second hollow body (24); and
- a single gear pair (46, 48) for transmitting rotation of the output shaft of said second motor reducer (30) to said third hollow body (26), the driven gear (48) of said gear pair having an annular body supported coaxially by the first end of the third hollow body (26).

2. The articulated robot wrist (20) according to Claim 1, **characterized in that** said second hollow body (24) has on the outside a seat designed to receive said second motor reducer (30), which is set substantially parallel to said third axis (VI).

3. The articulated robot wrist (20) according to Claim 1, **characterized in that** said first motor reducer (28) is housed within said first hollow body (22) substantially parallel to said first axis (IV).

4. The articulated robot wrist (20) according to Claim 1, **characterized in that** said first motor reducer (28) is carried on the outside by said first hollow body (22), set substantially parallel to said second axis (V).

5. The articulated robot wrist (20) according to Claim 1, **characterized in that** said second axis (V) is inclined with respect to said first and third axes (IV, VI) by an angle substantially equal to 60°.

6. The articulated robot wrist according to Claim 3, **characterized in that** said first gear pair includes gears with conical toothings (42, 44; 42, 50).

7. The articulated robot wrist according to Claim 4, **characterized in that** said first gear pair includes gears with cylindrical toothings.

8. The articulated robot wrist according to Claim 1, **characterized in that** said second gear pair includes gears with cylindrical toothings (48, 46).

9. The articulated robot wrist according to Claim 6, **characterized in that** said first gear pair is constituted by a pinion with conical toothing (42) and a crown wheel (44) with internal conical toothing.

10. The articulated robot wrist according to Claim 6, **characterized in that** said second gear pair is constituted by a pinion with conical toothing (42) and by a gear (50) with external conical toothing.

11. The articulated robot wrist according to Claim 1, **characterized in that** said first hollow body (22) is designed to be fixed on the prolongation of a tubular arm (18) of the robot, which can turn about said first axis (IV), said first motor reducer (27) being substantially contained in the overall dimensions of the cross section of said tubular arm (18).

12. The articulated robot wrist according to Claim 1, **characterized in that** said second hollow body (24) is mounted so that it can turn on said first hollow body (22) via a single crossed-roller bearing (33).

13. The articulated robot wrist according to Claim 1, **characterized in that** said third hollow body (26) is mounted so that it can turn on said second hollow body (24) via a single crossed-roller bearing (37).

## Patentansprüche

1. Bewegliches Roboterhandgelenk (20), umfassend:
- einen ersten hohlen Körper (22), im Wesentlichen ellbogenförmig, der ein erstes Ende und ein zweites Ende umfasst, und einen Durchgangshohlraum, der in den Enden endet, wobei das erste Ende des ersten hohlen Körpers (22) gestaltet ist, um auf einem Roboterteil befestigt zu sein, welches um eine erste Achse (IV) drehen kann;
- einen zweiten hohlen Körper (24), der im Wesentlichen ellbogenförmig ist, und ein erstes Ende und ein zweites Ende umfasst, und einen Durchgangshohlraum, der in den Enden endet, wobei das erste Ende des zweiten hohlen Körpers (24) auf dem zweiten Ende des ersten hohlen Körpers (22) befestigt ist, so dass es um eine zweite Achse (V) drehen kann, die zur ersten Achse (IV) geneigt ist; und
- einen dritten hohlen Körper (26), umfassend ein erstes Ende und ein zweites Ende, und einen Durchgangshohlraum, der in den Enden endet, wobei das erste Ende des dritten hohlen Körpers auf dem zweiten Ende des zweiten hohlen Körpers (24) befestigt ist, so dass es um eine dritte Achse (VI) drehen kann, die in Bezug auf die zweite Achse (V) geneigt ist;
- wobei die erste und dritte Achse (V, VI) identische Winkel aufweisen, anders als 90°, in Bezug auf die zweite Achse (V); und
- wobei die Durchgangshohlräume der ersten, zweiten und dritten hohlen Körper (22, 24, 26) einen kontinuierlichen Durchgang entlang der ersten, zweiten und dritten Achse (IV, V, VI) bilden, durch welche Kabel und/oder Rohre zur Versorgung und/oder Steuerung einer Vorrichtung gelegt sind, die mit dem dritten hohlen Körper (26) des Roboterhandgelenks verbunden ist,
- das Roboterhandgelenk weiterhin Mittel zur Steuerung der Rotation der zweiten und dritten hohlen Körper (24, 26) um die zweite und dritte Achse (V, VI) umfasst,
wobei der bewegliche Roboter **dadurch gekennzeichnet ist, dass**:
- der durch die erste und die dritte Achse (IV, VI) gebildete Winkel in Bezug auf die zweite Achse (V) im Wesentlichen zwischen 50° und 70° liegt,
- die Mittel zur Steuerung der Rotation der zweiten und dritten hohlen Körper (24, 26) umfassend:
- einen ersten Motor-Reduzierer (28), der durch den ersten hohlen Körper (22) getragen wird;
- ein einzelnes Zahnradpaar (42, 44; 42, 50) zur Übertragung der Rotation der Ausgangswelle des ersten Motor-Reduzierers (28) auf den zweiten hohlen Körper (24), wobei das angetriebene Zahnrad (44; 50) des Zahnradpaars einen kranzförmigen Körper aufweist, der koaxial durch das erste Ende des zweiten hohlen Körpers (24) getragen wird;
- einen zweiten Motor-Reduzierer (30), der durch den zweiten hohlen Körper (24) getragen wird; und
- ein einzelnes Zahnradpaar (46, 48) zur Übertragung der Rotation der Ausgangswelle des zweiten Motor-Reduzierers (30) zu dem dritten hohlen Körper (26), wobei das angetriebene Zahnrad (48) des Zahnradpaars einen kranzförmigen Körper aufweist, der koaxial durch das erste Ende des dritten hohlen Körpers (26) getragen wird.

2. Bewegliches Roboterhandgelenk (20) nach Anspruch 1, **dadurch gekennzeichnet, dass** der zweite hohle Körper (24) auf der Außenseite einen Sitz aufweist, der gestaltet ist zur Aufnahme des zweiten Motor-Reduzierers (30), welcher sich im Wesentlichen parallel zu der dritten Achse (VI) befindet.

3. Bewegliches Roboterhandgelenk (20) nach Anspruch 1, **dadurch gekennzeichnet, dass** der erste Motor-Reduzierer (28) innerhalb des ersten hohlen Körpers (22) im Wesentlichen parallel zu der ersten Achse (IV) beherbergt ist.

4. Bewegliches Roboterhandgelenk (20) nach Anspruch 1, **dadurch gekennzeichnet, dass** der erste Motor-Reduzierer (28) auf der Außenseite durch den ersten hohlen Körper (22) getragen wird, der sich im Wesentlichen parallel zu der zweiten Achse (V) befindet.

5. Bewegliches Roboterhandgelenk (20) nach Anspruch 1, **dadurch gekennzeichnet, dass** die zweite Achse (V) in Bezug auf die erste und dritte Achse (IV, VI) in einem Winkel von im Wesentlichen 60° geneigt ist.

6. Bewegliches Roboterhandgelenk (20) nach Anspruch 3, **dadurch gekennzeichnet, dass** das erste Zahnradpaar Zahnräder mit konischen Zähnen (42, 44; 42, 50) umfasst.

7. Bewegliches Roboterhandgelenk (20) nach Anspruch 4, **dadurch gekennzeichnet, dass** das erste Zahnradpaar Zahnräder mit zylindrischen Zähnen umfasst.

8. Bewegliches Roboterhandgelenk (20) nach Anspruch 1, **dadurch gekennzeichnet, dass** das zweite Zahnradpaar Zahnräder mit zylindrischen Zähnen (46, 48) umfasst.

9. Bewegliches Roboterhandgelenk (20) nach Anspruch 6, **dadurch gekennzeichnet, dass** das erste Zahnradpaar durch einen Ritzel mit konischen Zähnen (42) und einem Kronrad (44) mit inneren konischen Zähnen gebildet ist.

10. Bewegliches Roboterhandgelenk (20) nach Anspruch 6, **dadurch gekennzeichnet, dass** das zweite Zahnradpaar durch einen Ritzel mit konischen Zähnen (42) und durch ein Zahnrad (50) mit externen konischen Zähnen gebildet ist.

11. Bewegliches Roboterhandgelenk (20) nach Anspruch 1, **dadurch gekennzeichnet, dass** der erste hohle Körper (22) gestaltet ist, um auf der Verlängerung eines röhrenförmigen Arms (18) des Roboters befestigt zu sein, welcher um die erste Achse (IV) drehen kann, wobei der Motor-Reduzierer (27) im Wesentlichen in den Gesamtdimensionen des Querschnitts des röhrenförmigen Arms (18) beinhaltet ist.

12. Bewegliches Roboterhandgelenk (20) nach Anspruch 1, **dadurch gekennzeichnet, dass** der zweite hohle Körper (24) so befestigt ist, dass er um den ersten hohlen Körper (22) über ein einzelnes Kreuzrollenlager (33) drehen kann.

13. Bewegliches Roboterhandgelenk (20) nach Anspruch 1, **dadurch gekennzeichnet, dass** der dritte hohle Körper (26) so befestigt ist, dass er über ein einzelnes Kreuzrollenlager (37) um den zweiten hohlen Körper (24) drehen kann.

## Revendications

1. Un poignet de robot articulé (20) comprenant :
- un premier corps creux (22), substantiellement en forme de coude, comprenant une première extrémité et une seconde extrémité, et une cavité traversante débouchant dans lesdites extrémités, ladite première extrémité du premier corps creux (22) étant conçue de manière à être montée sur un composant de robot qui peut tourner autour d'un premier axe (IV) ;
- un second corps creux (24), essentiellement en forme de coude, comprenant une première extrémité et une seconde extrémité, et une cavité traversante débouchant dans lesdites extrémités, ladite première extrémité du second corps creux (24) étant montée sur ladite seconde extrémité dudit premier corps creux (22) de manière à pouvoir tourner autour d'un second axe (V) incliné par rapport audit premier axe (IV) ; et
- un troisième corps creux (26) incluant une première extrémité et une seconde extrémité, et une cavité traversante débouchant dans lesdites extrémités, ladite première extrémité du troisième corps creux étant montée sur ladite seconde extrémité dudit second corps creux (24) de manière à pouvoir tourner autour d'un troisième axe (VI) incliné par rapport audit second axe (V) ;
- dans lequel lesdits premier et troisième axes (IV, VI) forment des angles identiques, différents de 90°, par rapport audit second axe (V) ; et
- dans lequel les cavités traversantes desdits premier, second et troisième corps creux (22, 24, 26) forment un passage continu le long desdits premier, second et troisième axes (IV, V, VI), avec des câbles et/ou des tuyaux installés au travers pour alimenter et/ou contrôler un appareil associé au troisième corps creux (26) du poignet de robot,
- ledit poignet de robot comprenant en outre des moyens pour contrôler la rotation desdits second et troisième corps creux (24, 26) autour desdits second et troisième axes (V, VI),
ledit robot articulé étant **caractérisé en ce que** :
- ledit angle formé par lesdits premier et troisième axes (IV, VI) par rapport audit second axe (V) est compris entre substantiellement 50° et 70°,
- lesdits moyens pour contrôler la rotation desdits second et troisième corps creux (24, 26) comprennent :
- un premier motoréducteur (28) porté par ledit premier corps creux (22) ;
- un couple de pignons uniques (42, 44 ; 42, 50) pour transmettre la rotation de l'arbre de sortie dudit premier motoréducteur (28) audit second corps creux (24), le pignon mené (44 ; 50) dudit couple de pignons ayant un corps annulaire porté coaxialement par ladite première extrémité du second corps creux (24) ;
- un second motoréducteur (30), porté par ledit second corps creux (24) ; et
- un couple de pignons uniques (46, 48) pour transmettre la rotation de l'arbre de sortie dudit second motoréducteur (30) audit troisième corps creux (26), le pignon mené (48) de ladite paire de pignons ayant un corps annulaire supporté coaxialement par la première extrémité du troisième corps creux (26).

2. Le poignet de robot articulé (20) selon la revendication 1, **caractérisé en ce que** ledit second corps creux (24) possède à l'extérieur un siège conçu pour recevoir ledit second motoréducteur (30), qui est disposé substantiellement parallèlement audit troisième axe (VI).

3. Le poignet de robot articulé (20) selon la revendication 1, **caractérisé en ce que** ledit premier motoréducteur (28) est logé à l'intérieur dudit premier corps creux (22) substantiellement parallèlement audit premier axe (IV).

4. Le poignet de robot articulé (20) selon la revendication 1, **caractérisé en ce que** ledit premier motoréducteur (28) est porté sur l'extérieur par ledit premier corps creux (22), disposé substantiellement parallèlement audit second axe (V).

5. Le poignet de robot articulé (20) selon la revendication 1, **caractérisé en ce que** ledit second axe (V) est incliné par rapport auxdits premier et troisième axes (IV, VI) d'un angle substantiellement égal à 60°.

6. Le poignet de robot articulé selon la revendication 3, **caractérisé en ce que** ledit premier couple de pignons comprend des pignons à denture conique (42, 44 ; 42, 50).

7. Le poignet de robot articulé selon la revendication 4, **caractérisé en ce que** ledit premier couple de pignons comprend des pignons avec des dentures cylindriques.

8. Le poignet de robot articulé selon la revendication 1, **caractérisé en ce que** ledit second couple de pignons comprend des pignons avec des dentures cylindriques (48, 46).

9. Le poignet de robot articulé selon la revendication 6, **caractérisé en ce que** le premier couple de pignons est constitué d'un pignon avec une denture conique (42) et d'une couronne (44) avec une denture conique interne.

10. Le poignet de robot articulé selon la revendication 6, **caractérisé en ce que** ledit second couple de pignons est constitué d'un pignon avec une denture conique (42) et d'un pignon (50) avec une denture conique externe.

11. Le poignet de robot articulé selon la revendication 1, **caractérisé en ce que** ledit premier corps creux (22) est conçu pour être fixé sur le prolongement d'un bras tubulaire (18) du robot, qui peut tourner autour dudit premier axe (IV), ledit premier motoréducteur (27) étant substantiellement contenu dans les dimensions hors tout de la section droite dudit bras tubulaire (18).

12. Le poignet de robot articulé selon la revendication 1, **caractérisé en ce que** ledit second corps creux (24) est monté de manière à pouvoir tourner sur ledit premier corps creux (22) par l'intermédiaire d'un unique roulement à rouleaux croisés (33).

13. Le poignet de robot articulé selon la revendication 1, **caractérisé en ce que** ledit troisième corps creux (26) est monté de manière à pouvoir tourner sur ledit second corps creux (24) par l'intermédiaire d'un unique roulement à rouleaux croisés (37).
